**Europäisches Patentamt**

**European Patent Office**

**Office européen des brevets**

(19)

(11) Publication number : **0 436 125 B1**

# (12) EUROPEAN PATENT SPECIFICATION

(45) Date of publication of patent specification :
20.10.93 Bulletin 93/42

(51) Int. Cl.[5] : **G01P 5/20**

(21) Application number : **90123017.7**

(22) Date of filing : **30.11.90**

(54) **Flowing velocity measurement system.**

(30) Priority : **02.12.89 JP 313911/89**

(43) Date of publication of application :
**10.07.91 Bulletin 91/28**

(45) Publication of the grant of the patent :
**20.10.93 Bulletin 93/42**

(84) Designated Contracting States :
**BE DE FR GB IT NL SE**

(56) References cited :
**US-A- 3 706 495**
**US-A- 4 729 109**
**APPLIED OPTICS, vol. 28, no. 20, 15th October 1989, pages 4328-4332, New York, US; B. KHALIGHI et al.: "Particle tracking velocimetry: an automatic image processing algorithm"**

(56) References cited :
**V.D.I.-ZEITSCHRIFT, vol. 125, no. 12, June 1983, page 501, Düsseldorf, DE; P. PHILIPPS: "Berechnung und Messung von Gasgeschwindigkeiten im Arbeitsraum von Kolbenmaschinen"**
**Applied Optics, Vol. 28, No. 4, pages 740-748, "Digital image velocimetry" by Y.-C- Cho**

(73) Proprietor : **EZEL INC.**
**2-22-2 Koishikawa**
**Bunkyo-ku Tokyo 112 (JP)**
Proprietor : **SHARP KABUSHIKI KAISHA**
**22-22 Nagaike-cho Abeno-ku**
**Osaka 545 (JP)**

(72) Inventor : **Kumagai, Ryohei, c/o Ezel Inc.**
**Wajyun Bldg.**
**2-22-2 Koishikawa**
**Bunkyo-ku, Tokyo 112 (JP)**

(74) Representative : **Patentanwälte Grünecker, Kinkeldey, Stockmair & Partner**
**Maximilianstrasse 58**
**D-80538 München (DE)**

EP 0 436 125 B1

## Description

The present invention relates to an apparatus for measuring the flow-velocity distribution of a fluid enriched with particles, according to Claim 1.

A spark tracing method is a measurement of velocity of a gas flow by discharging sparks at each predetermined period so as to photograph a "time string" represented by "spark string" generated at each above discharging. Visualization of a high speed gas flow is possible by heightening the frequency of pulse voltage at the certain level. Also, photographing of a spark string is easily performed since the spark string luminesces itself.

There is a problem that the preparation of an expensive system is necessary due to the requirement of the powers of a high frequency and a high voltage for the tracing method of a spark. Furthermore, an accurate measurement of a flowing velocity inside of boundary layer is not possible due to the disturbance of gas caused by spark discharge.

A method for detecting fluid velocity is known from "Particle tracking velocimetry: an automatic image processing algorithm, Applied Optics, Vol. 28, No.20, 15 October 1989" in which multiple exposure image of light from small suspended particles moving with the fluid are used to record the particle streaks or displacements and therby, the fluid velocity at several locations over a region of the flow. By a suitable pulsing or coding of the exposure of the illumination, it is possible to obtain the velocity direction and the magnitude. An image processing algorithm, utilizing gradient operators and curve fitting techniques is used to extract the valid flow streaks.

A digital image image velocimetry technique is described in "Digital image velocimetry, Applied Optics, Vol. 28, No. 4, 15 February 1989" in which the whole process from the image acquisition to the velocity determination can be carried out electronically. It is mentioned that it is possible to determine the velocity of a seed particle from the particle travel distance divided by the time interval between two exposures. Since, in practice, a photographic image contains a large number of image elements corresponding to similar seed particles, it is extremely difficult to identify the image elements of specific particles for the measurement of the image displacement. It is, therefore, suggested to determine the velocity by the Fourier transform method and not by determining the travel distance of the particles between successive exposures. Furthermore, the article suggests capturing a time sequence of images by using a high-speed or video camera with each frame containing a single exposure image instead of using multiple-exposure images. A finite number of exposure images are sampled with a prescribed separation in time. The sampled images are digitized on the image processor, enhanced and linearly superimposed to construct an image field, which is equivalent to a multiple-exposure image.

In view of this prior art, it is the object of the present invention to provide a system for measuring flow velocity of fluids that achieves determination of flow velocity in a faster and simpler manner.

This object is solved by the subject matter of Claim 1.

The inventive system calculates flow velocity of particles in a fluid by calculating the centroid of particles captured by at least two photographs and determining the coordinates of the centroids. A very fast and simple detection of closest neighbor centroid is possible by ordering the centroids represented by the coordinates in a manner as described in Claim 1.

Fig.1 shows a flowing chart describing the procedure of a flowing velocity analysis according to an embodiment of the present invention;

Fig.2 shows a diagram showing of the movement of fluids around an object.

11 to 14....... particles (elements to be measured)

## PREFERED EMBODIMENT OF THE PRESENT INVENTION

Hereinafter, present invention is described according to the embodiments with referring to the attached drawings.

Fig.2 shows an example of flowing velocity distribution of a gas around an object 10. Four particles 11 to 14 are shown as elements to be measured. Particles 11 to 14 aligning on a line perpendicular to the surface of the object 10 at a time (t) move, as shown in the finger, as time passes (t +Δt). Here, it is shown that although particles 11 and 12 remote from the object 10 move at the same flowing velocity, flowing velocity of the particles slows down as they close to the object 10 due to the viscosity of fluid. Therefore, the velocity of a particle 14 is the slowest of all.

It is possible to calculate moving velocities of the particles so as to obtain a flowing velocity distribution by photographing the above particles at every predetermined period of time (Δt) by a camera and dividing the moving distance for each particle by the above period of time (Δt).

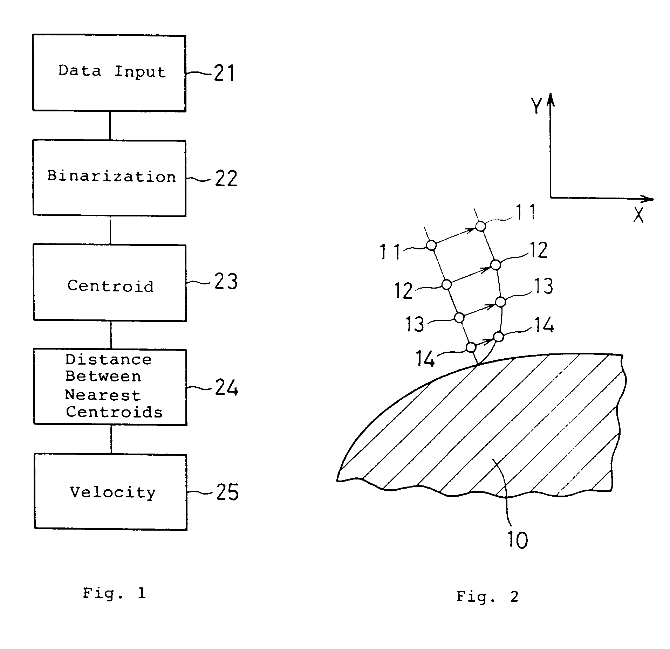

Fig.1 shows the procedure of a flowing velocity analysis performed by a flowing velocity measurement system.

A camera, which is not shown in the figure, takes a photograph of fluid around the object 10, for example, at every 1/30 second. The above shooting time interval is determined as short as possible, reviewing the distances among each particle, i.e. elements to be measured, and a flowing velocity. At step 21, an image data input from a camera is A/D converted and is input to an computer. This input data is a digital value and is binarized at step 22 by using the predetermined threshold. Here, particles 11 to 14 (Fig.2) are determined to be "1" and other parts are determined to be "0". At step 23, centroid of each particle is calculated by dividing the 1st moment of each particle by the area.

According to the above, the locations of each particle in fluid are registered in a memory of a computer at every 1/30 second. At step 24, the distance between nearest centroids of each particle obtained by the photographing with respect to each particle obtained by the previous photographing. Here, the distance between nearest centroids indicates the shortest distance from a centroid of a configuration to the centroid of the other configurations. When one particle is taken into a consideration, the location of the above particle 1/30 second before is assumed to be the location corresponding to the distance between nearest centroids from the calculation of the distance between nearest centorid of each particle on the present photographing.

At step 25, velocity of each particle is calculated by dividing the distance between nearest centroids for each particle by 1/30 second, after calculating the location of each particle 1/30 second before. Accordingly the flowing velocity distribution is calculated.

According to the present embodiment as mentioned above, corpuscles are supplied into the fluids to be observed, and the flowing velocity is calculated by analyzing by means of a computer after obtaining the movement of the above particles as an image. Therefore, as to the present flowing velocity measurement system, the powers of a high frequency and a high voltage, that are required by a tracing method of a spark, are not necessary, so the structure is a simple. Also, a flowing velocity distribution is accurately measure since it does not disturb the fluids, differently from the tracing method of a spark. Therefore, it is possible to obtain an accurate flowing velocity distribution of the boundary layer.

Hereinafter, an example of the calculation of the distance between nearest centroids is described.

As shown in Fig.2, the origin of the coordinate axes is determined on the corner of upper left. Here, downward direction is y direction and rightward direction is x direction. Coordinates (x,y) of each particle are written in a table in a memory of a computer as follows.

Table

| $X_1$ | $y_1$ |
|---|---|
| $X_2$ | $y_2$ |
| $X_3$ | $y_3$ |
| . | . |
| . | . |
| . | . |
| $X_n$ | $y_n$ |

According to the above table, y coordinate train is arranged so as to increase monotonously, and x coordinate train is arranged so as to increase monotonously in each particle of the same y coordinate.

Since the distances between the nearest centroids can be defined for each particle, taking each particle as a reference particle one by one from which centroid distances to other particles are calculated. The centroid distances are calculated sequentially between the reference particle and the other particles from the nearest to remote one. "Nearest" means the order on the table is the nearest, therefore, as for the coordinate system above, centroid distance is calculated sequentially from the one whose value of y coordinate is the same as or the nearest to the centroid of the reference particle.

For example, when the particle whose centroid coordinate is $(X_k, y_k)$ is the reference particle, the centroid distances to other particles are evaluated in increasing order or decreasing order. Here the increasing order is applied. First the centroid distance $d_{k, k+1}$ between the reference particle and the next particle is calculated as follows:

$$d_{k, k-1} = \{(X_k - X_{k+1})^2 + (y_k - y_{k+1})^2\}^{1/2} \quad (1)$$

Next the centroid coordinate $(X_{k+2}, y_{k+2})$ of next particle is evaluated and the value of the coordinates of $X_k$, $X_{k+1}$, $X_{k+2}$ are compared. Then, if the values are

$$X_k \geq X_{k+1} \geq X_{k+2} \quad (2)$$

or

$$X_k \leq X_{k+1} \leq X_{k+2} \quad (3)$$

the values of $d_{k, k-1}$ and $d_{k, k+2}$ are always

$$d_{k, k+1} \leq d_{k, k+2}$$

Therefore the calculation of $d_{k, k+2}$ is omitted and the value of next group is evaluated.

In this way, by omitting complex calculations as many times as possible, the process becomes efficient.

If the condition of (2), (3) or both of them are not satisfied, $d_{k, k+2}$ is calculated and the smaller one between $d_{k, k-1}$ and $d_{k, k+2}$ is registered.

Thereafter ( $X_{k+3}$ , $y_{k+3}$ ), ( $x_{k+4}$ , $y_{k+4}$ ), ..., are evaluated in the same manner as the above; that is, evaluation by the conditions (2) and (3) and minimal times distance calculations are performed; finally the minimal value of distance is registered.

After the evaluation in increasing order, the evaluation in decreasing order is performed. As for the evaluation in decreasing order, the condition formulas (4) and (5) are applied instead of the above conditions (2) and (3).

$$X_k \leqq X_{k-1} \leqq X_{k-2} \quad (5)$$
$$X_k \geqq X_{k-1} \geqq X_{k-2} \quad (4)$$

When the evaluation in decreasing order is started, the minimum distance (hereinafter it is called $d_{u, min}$) obtained by the evaluation in increasing order is used as a reference distance. When a distance $d_{k, k+1}$ is

$$d_{k, k-1} \geqq d_{u, min}$$

the particles which do not satisfy the conditions (4) or (5) are evaluated by comparing their distances with $d_{u, min}$, then, the minimal distance is finally registered and the following evaluation is performed.

According to the above, the distance between nearest centroids for each particle are calculated.

In this case, the evaluations are performed from increasing order to decreasing order, however the same result will be obtained by the evaluation in reverse sequences.

According to the present invention as mentioned above, it is possible to measure an accurate flowing velocity without disturbing a flow with a simple system.

## Claims

1. Apparatus for measuring the flow-velocity distribution of a fluid enriched with particles, comprising:

a means for photographing the fluid containing the particles at predetermined time intervals;

means for calculating the coordinate pairs of centroids of particles contained in each of successive exposures;

means for storing coordinate-pairs of the respective calculated centroids of a composite image generated from two successive exposures in a table, whereby the coordinate pairs are stored in an increasing manner with respect to a first coordinate dimension, and whereby coordinate-pairs having equality with regard to said first dimension are further ordered in an increasing manner according to a second coordinate dimension,

means for calculating, for each centroid, its velocity, by determining its closest neighbour centroid, which is achieved by calculating the distances to other neighbor centroids in the table in either an increasing or decreasing order, whereby a distance to a further neighbouring centroid is only calculated if said further centroid has a second coordinate which is within an absolute range in between the second coordinate of the centroid and the second coordinate of that neighbour centroid for which the distance has already been calculated and found to be currently the shortest neighbour distance, by comparing the resultant detected shortest distance to the shortest distance found by a similar search in a respective reverse, i.e. decreasing/increasing order of the table and by dividing the finally detected shorter distance by the predetermined time interval to obtain the centroid's velocity.

## Patentansprüche

1. Vorrichtung zum Messen der Strömungsgeschwindigkeitsverteilung einer Flüssigkeit, welche mit Partikeln angereichert ist, mit:

einer Einrichtung zum Fotografieren der die Partikel enthaltenden Flüssigkeit zu vorbestimmten Zeitintervallen;

einer Einrichtung zum Berechnen der Koordinatenpaare von Schwerpunkten (centroids) von Partikeln, die in jeder von aufeinanderfolgenden Aufnahmen enthalten sind;

einer Einrichtung zum Speichern der Koordinatenpaare der entsprechend berechneten Schwerpunkte eines zusammengesetzten Bildes, welches durch zwei aufeinanderfolgende Aufnahmen erzeugt wurde, in einer Tabelle, wobei die Koordinatenpaare in aufsteigender Reihenfolge bezüglich einer ersten Koordinatenrichtung gespeichert werden und wobei Koordinatenpaare, die bezüglich der ersten Richtung übereinstimmen, weiterhin in aufsteigender Reihenfolge bezüglich der zweiten Koordinatenrichtung geordnet werden,

einer Einrichtung zum Berechnen der Geschwindigkeit eines jeden Schwerpunkts, indem dessen nächster Nachbarschwerpunkt bestimmt wird, was durch Berechnen des Abstandes entweder in aufsteigender oder absteigender Reihenfolge zu anderen Nachbarschwerpunkten in der Tabelle erreicht wird, wobei ein Abstand zu einem weiteren Nachbarschwerpunkt nur dann berechnet wird, wenn der weitere Schwerpunkt eine zweite Koordinate aufweist, die sich innerhalb eines absoluten Abstandes zwischen der zweiten Koordinate des Schwerpunktes und der zweiten Koordinate des Nachbarschwerpunktes befindet, für den der Abstand bereits berechnet worden ist und für den festgestellt worden ist, daß er den momentan kürzesten Nachbarabstand aufweist, und indem der verbleibende detektierte kürzeste Abstand mit dem kürzesten Abstand verglichen wird, welcher bei einer ähnlichen Suche in der entsprechend umgekehrten Reihenfolge, d.h. in der abfallenden/ aufsteigenden Reihenfolge bezüglich der Tabelle gefunden worden ist und indem der schließlich detektierte kürzeste Abstand durch das vorgegebene Zeitintervall dividiert wird, um die Geschwindigkeit des Schwerpunktes zu erhalten.

**Revendications**

1. Appareil pour mesurer la répartition des vitesses d'écoulement d'un fluide enrichi de particules comprenant:

un moyen pour photographier le fluide contenant les particules à des intervalles de temps prédéterminés;

un moyen pour calculer les couples de coordonnées de centroïdes de particules présentes dans chacun des clichés successifs;

un moyen pour stocker les couples de coordonnées des centroïdes respectifs calculés d'une image composite produite par deux clichés successifs dans une table, afin de stocker les couples de coordonnées dans l'ordre croissant d'une première coordonnée, et afin d'ordonner en outre dans l'ordre croissant d'une seconde coordonnée des couples de coordonnées dont lesdites premières coordonnées sont identiques,

un moyen pour calculer la vitesse de chaque centroïde, en déterminant son centroïde voisin le plus proche, ce qui est obtenu par calcul des distances aux autres centroïdes voisins dans la table soit en ordre croissant, soit en ordre décroissant, ce qui permet de ne calculer une distance à un autre centroïde voisin que si ledit autre centroïde présente une seconde coordonnée se situant à l'intérieur d'un intervalle absolu compris entre la seconde coordonnée du centroïde et la seconde coordonnée du centroïde voisin pour lequel la distance a déjà été calculée et fixée comme étant à l'instant courant, la distance voisine la plus courte, par comparaison de la distance la plus courte obtenue, avec la distance la plus courte résultant d'une recherche du même type en sens inverse, c'est-à-dire dans l'ordre décroissant/croissant de la table, et par division de la distance la plus courte venant d'être détectée, par l'intervalle de temps prédéterminé, afin d'obtenir la vitesse du centroïde.

| Data Input | ~21 |

| Binarization | ~22 |

| Centroid | ~23 |

| Distance Between Nearest Centroids | ~24 |

| Velocity | ~25 |

Fig. 1

Fig. 2